# EUROPEAN PATENT APPLICATION

(11) **EP 4 707 015 A1**
(43) Date of publication of application: **11.03.2026**
(21) Application number: 25805603.5
(22) Date of filing: 18.03.2025
(51) Int. Cl.: B60K 6/405, B60K 6/26, B60K 1/00, B60L 15/20

(54) **POWER DEVICE AND AUTOMOBILE**

(30) Priority: 17.06.2024 CN 202410774693
(71) Applicant: Chery Automobile Co., Ltd., Wuhu, Anhui 241006 (CN)
(72) Inventor: HAN, Yanyan., Anhui 241006 (CN); WANG, Wei., Anhui 241006 (CN); GAN, Shenglin., Anhui 241006 (CN); ZHANG, Yijing., Anhui 241006 (CN); KONG, Xiangzhou., Anhui 241006 (CN)
(74) Representative: Reddie & Grose LLP
(86) International application number: PCT/CN2025/083179
(87) International publication number: WO 2025/260867

(57) **Abstract**

The present disclosure relates to a power device and a vehicle. The power device includes a first motor (1), a second motor (2), a housing (3), a controller (4), and a conductive member (5), where the first motor (1) and the second motor (2) are both located inside the housing (3) and arranged at intervals along a width direction of the housing (3); the controller (4) is located inside the housing (3), and the controller (4) is located above the first motor (1) and the second motor (2) along a height direction of the housing (3); a gap (100) is formed between the controller (4), the first motor (1), and the second motor (2); the conductive member (5) is located in the gap (100), and electrically connects the controller (4) to the first motor (1) as well as the controller (4) to the second motor (2). The power device of the present disclosure can reduce the occupation of the internal space of the vehicle.

## Description

The present disclosure claims priority to Chinese Patent Application No. 202410774693.3, filed on June 17, 2024, and entitled "POWER DEVICE AND VEHICLE", the disclosure of which is herein incorporated by reference in its entirety.

### TECHNICAL FIELD

The present disclosure relates to the field of automotive power technologies, and in particular, relates to a power device and a vehicle.

### BACKGROUND

A vehicle is a common means of transportation. With the development of science and technology, the power devices of the vehicle have also begun to be improved.

In addition to the engine, the vehicle further includes a motor and a controller. The controller can control the operating condition of the motor to adapt to the operating condition of the engine.

In the related art, the addition of the motor and the controller occupies more space inside the vehicle.

### SUMMARY

In view of this, the present disclosure provides a power device and a vehicle, so as to reduce the space occupied by the power device in the vehicle.

Specifically, the present disclosure includes the following technical solutions.

According to a first aspect of the present disclosure, a power device is provided. The power device includes a housing, a first motor, a second motor, a conductive member, and a controller.

The first motor and the second motor are both located inside the housing and arranged at intervals along a width direction of the housing.

The controller is located inside the housing, and the controller is located above the first motor and the second motor along a height direction of the housing.

A gap is formed between the controller, the first motor, and the second motor.

The conductive member is located in the gap, and electrically connects the controller to the first motor as well as the controller to the second motor.

In some embodiments, the housing includes a first sub-housing and a second sub-housing, wherein the first sub-housing is provided with a first accommodating cavity, the second sub-housing is provided with a second accommodating cavity, a third accommodating cavity is formed between the first sub-housing and the second sub-housing, and the conductive member extends from the first accommodating cavity into the second accommodating cavity through the third accommodating cavity and relatively seals the first accommodating cavity and the second accommodating cavity.

In some embodiments, the first sub-housing and the second sub-housing are connected and form a first sealing surface, and the first sealing surface extends along a circumferential direction of the third accommodating cavity.

In some embodiments, the conductive member includes a first wiring terminal, a connecting part, and a second wiring terminal, wherein the connecting part connects the first wiring terminal and the second wiring terminal, the first wiring terminal is connected to the controller, and the second wiring terminal is separately connected to the first motor and the second motor.

In some embodiments, the power device includes a rear cover, wherein the rear cover is connected to the second sub-housing to form a second sealing surface, the second sealing surface extends along a circumferential direction of an opening of the second accommodating cavity, the conductive member and the rear cover are arranged at intervals along a length direction of the housing, and the first wiring terminal is closer to the second sealing surface than the second wiring terminal is.

In some embodiments, the first motor is cylindrical, the second motor is cylindrical, and the conductive member is located between a side surface of the first motor and a side surface of the second motor.

In some embodiments, along the width direction of the housing, the conductive member is provided with a first end and a second end, a first distance is formed between the first end and an output end of the first motor along the width direction of the housing, and a second distance is formed between the second end and an output end of the second motor along the width direction of the housing, the first distance being substantially equal to the second distance.

In some embodiments, a width of a part of the conductive member located in the gap is greater than the first distance.

In some embodiments, the conductive member includes multiple third wiring terminals, wherein the multiple third wiring terminals are located between the first motor and the second motor and arranged along a width direction of the conductive member, an electrical clearance is formed between two adjacent third wiring terminals, and each of the third wiring terminals is connected to one of the first motor and the second motor.

According to a second aspect of the present disclosure, a vehicle is provided. The vehicle includes the power device as defined in the above technical solutions.

The technical solutions according to the embodiments of the present disclosure achieve at least the following beneficial effects. The housing provides support for the first motor, the second motor, the conductive member, and the controller. The controller controls the operating condition of the first motor and the second motor through the conductive member. The conductive member is located in the gap, which improves the space utilization efficiency of the power device of the present disclosure, thereby improving the compactness and reducing the space occupation of the power device of the present disclosure.

### BRIEF DESCRIPTION OF DRAWINGS

To describe the technical solutions in embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other accompanying drawings from these accompanying drawings without creative efforts.
FIG. 1 is a schematic front view of a power device according to some embodiments of the present disclosure;
FIG. 2 is a detailed schematic view of A in FIG. 1; and
FIG. 3 is a partial cross-sectional schematic view of a power device according to some embodiments of the present disclosure.

The reference numerals in the accompanying drawings are respectively denoted as:
100, gap;
1, first motor;
2, second motor;
3, housing; 301, third accommodating cavity; 31, first sub-housing; 3101, first accommodating cavity; 32, second sub-housing; 3201, second accommodating cavity; 33, first sealing surface; 34, second sealing surface;
4, controller;
5, conductive member; 511, first wiring terminal; 512, connecting part; 513, second wiring terminal; 514, third wiring terminal; 521, first end; 522, second end;
6, rear cover;
7, connector.

The above accompanying drawings have shown the explicit embodiments of the present disclosure, which will be described in detail hereinafter. These accompanying drawings and text descriptions are not intended to limit the scope of the conception of the present disclosure in any way, but to illustrate the concept of the present disclosure to those skilled in the art with reference to specific embodiments.

### DETAILED DESCRIPTION

For clearer descriptions of the objectives, technical solutions, and advantages of the present disclosure, embodiments of the present disclosure are further described in detail hereinafter with reference to the accompanying drawings.

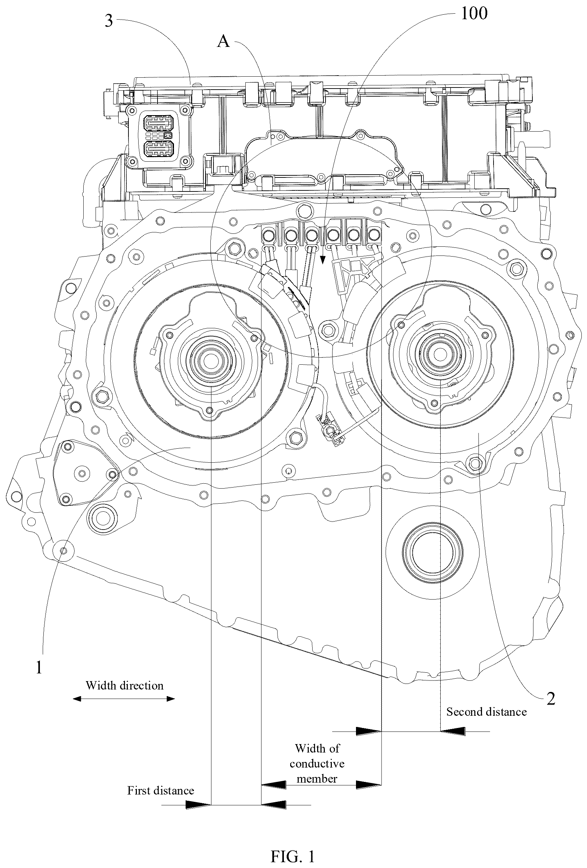

Orientation terms, such as "upper", "lower", and "side", used in the embodiments of the present disclosure are generally based on the relative relationship between orientations illustrated in FIG. 1, and these orientation terms are merely used to describe the relationship between structures more clearly, rather than describe absolute orientations. In the case that the product is placed in different postures, the orientation may change, for example, "upper" and "lower" may be interchanged.

Unless otherwise defined, all technical terms used in the embodiments of the present disclosure have the same meaning as commonly understood by those of ordinary skill in the art.

For clearer descriptions of the technical solutions and advantages of the present disclosure, the embodiments of the present disclosure are further described in detail hereinafter with reference to the accompanying drawings.

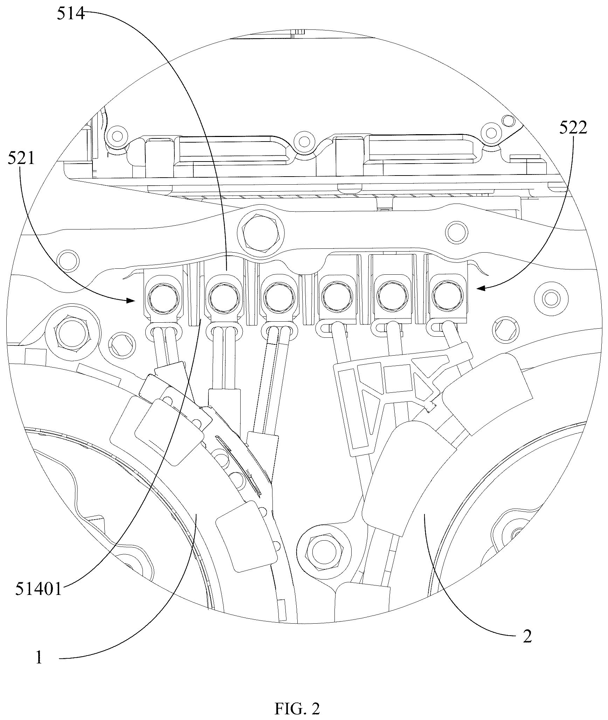

According to a first aspect of the present disclosure, a power device is provided. As shown in FIGS. 1 and 2, the power device includes a housing 3, a first motor 1, a second motor 2, a conductive member 5, and a controller 4.

The first motor 1 and the second motor 2 are both located inside the housing 3 and arranged at intervals along the width direction of the housing 3.

The controller 4 is located inside the housing 3, and the controller 4 is located above the first motor 1 and the second motor 2 along the height direction of the housing 3.

A gap 100 is formed between the controller 4, the first motor 1, and the second motor 2.

The conductive member 5 is located in the gap 100, and electrically connects the controller 4 to the first motor 1 as well as the controller 4 to the second motor 2.

It should be understood that the housing 3 provides support for the first motor 1, the second motor 2, the conductive member 5, and the controller 4. The controller 4 controls the operating condition of the first motor 1 and the second motor 2 through the conductive member 5. At least a part of the conductive member 5 is located between the first motor 1 and the second motor 2, which improves the space utilization efficiency of the power device of the present disclosure, thereby improving the compactness and reducing the space occupation of the power device of the present disclosure.

In the embodiments of the present disclosure, the first motor 1, the second motor 2, and the controller 4 generally have relatively fixed structures. Meanwhile, these three components are designed to fulfill their respective functions and are generally deficient in terms of spatial layout. Therefore, when the controller 4 is disposed above the first motor 1 and the second motor 2, a relatively large gap 100 is often formed between the three components to avoid interference. The existence of such a gap 100 causes the power device to occupy more space. In addition, the controller 4 needs to transmit electrical signals to the first motor 1 and the second motor 2 through the conductive member 5, so as to control the first motor 1 and the second motor 2. However, the conductive member 5 is generally disposed outside the housing 3, which not only easily causes damage to the conductive member 5, but also occupies more space.

In the present disclosure, the conductive member 5 is disposed in the gap 100 formed by the first motor 1, the second motor 2, and the controller 4, which is not only conducive to protecting the conductive member 5 and maintaining its normal operation, but also improves the compactness of the power device of the present disclosure, thereby reducing the space occupation.

In the embodiments of the present disclosure, serving as a structure for supporting the first motor 1, the second motor 2, and the controller 4, the housing 3 is made by an integrated molding process or is of a separated structure, with different parts thereof supporting the first motor 1, the second motor 2, and the controller 4, respectively and then connected to form the housing.

In the embodiments of the present disclosure, the first motor 1 serves as a generator to generate electricity, or serves as a power source to transmit power to other structures of the vehicle.

In the embodiments of the present disclosure, the second motor 2 serves as a generator to generate electricity, or serves as a power source to transmit power to other structures of the vehicle.

In the embodiments of the present disclosure, the conductive member 5 is a copper bar or an aluminum bar. The conductive member 5 is made of a conductive metal such as copper or aluminum, or an alloy containing a conductive metal.

In the embodiments of the present disclosure, the controller 4 is a motor control unit (MCU).

In the embodiments of the present disclosure, the first motor 1 and the second motor 2 are both located in the housing 3 and spaced apart in the width direction of the housing 3. Arranging in the width direction means that the output end of the first motor 1 is parallel to the output end of the second motor 2. In this way, interference between the first motor 1 and the second motor 2 is reduced, which facilitates the power transmission between the first motor 1 and the second motor 2, and other components. The gap 100 includes an interval formed between the first motor 1 and the second motor 2 in the width direction of the housing 3.

In the embodiments of the present disclosure, a gap 100 is formed between the controller 4, the first motor 1, and the second motor 2. The gap 100 is formed after the positions of the controller 4, the first motor 1, and the second motor 2 are fixed by connecting the three to the housing 3 separately. In the embodiments of the present disclosure, the gap 100 includes a region formed by the space below the controller 4, one side of the first motor 1 proximal to the second motor 2, and one side of the second motor 2 proximal to the first motor 1.

In the embodiments of the present disclosure, the conductive member 5 is located in the gap 100, and connects the controller 4 to the first motor 1 as well as the controller 4 to the second motor 2. Among them, the conductive member 5 can achieve positional fixation by means of being electrically connected to the first motor 1, the second motor 2, and the controller 4, respectively. The conductive member 5 realizes the electrical connection by abutting against the wires led out from the first motor 1, the wires led out from the second motor 2, and the wires led out from the controller 4 via bolts, while maintaining its relative positional fixation. The conductive member 5 also remains positioned within the gap 100 by relying on the support provided by the housing 3. The conductive member 5 and the housing 3 can be connected via bolts.

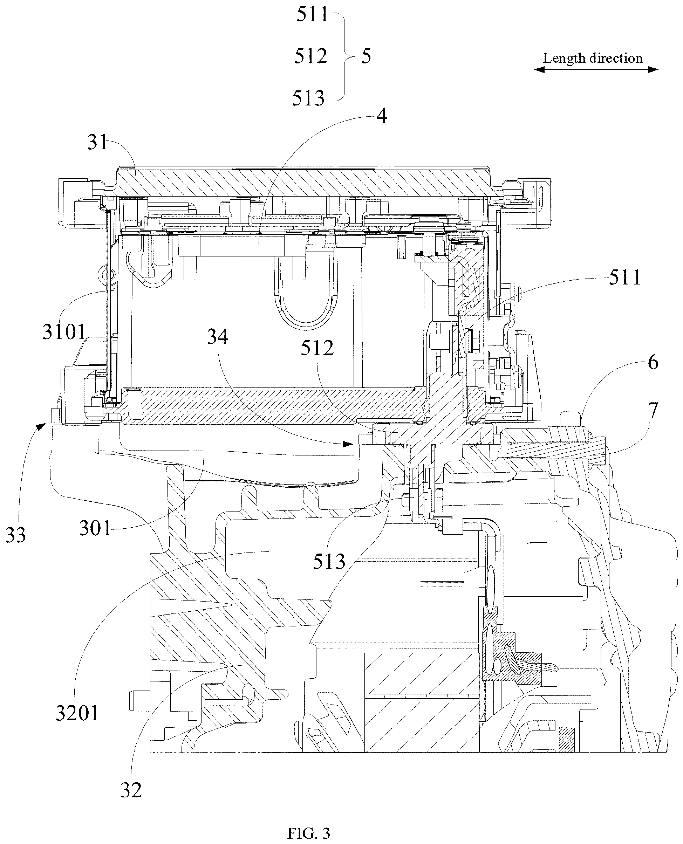

In some embodiments of the present disclosure, since the first motor 1, the second motor 2, and the controller 4 are easily damaged due to contamination, the first motor, the second motor, and the controller all need a relatively closed space to complete the operation. As shown in FIG. 3, the housing 3 includes a first sub-housing 31 and a second sub-housing 32. The first sub-housing 31 is provided with a first accommodating cavity 3101, the second sub-housing 32 is provided with a second accommodating cavity 3201, a third accommodating cavity 301 is formed between the first sub-housing 31 and the second sub-housing 32, and the conductive member 5 extends from the first accommodating cavity 3101 into the second accommodating cavity 3201 through the third accommodating cavity 301 and relatively seals the first accommodating cavity 3101 and the second accommodating cavity 3201. In this way, the sealing performance of the first motor 1, the second motor 2, and the controller 4 can be improved.

It should be understood that the first accommodating cavity 3101 accommodates the controller 4, and the second accommodating cavity 3201 accommodates the first motor 1 and the second motor 2. Since the operating environment requirements of the first motor 1 and the second motor 2 are similar, placing the first motor 1 and the second motor 2 in the second accommodating cavity 3201 is beneficial to improving the compactness of the power device of the present disclosure. The third accommodating cavity 301 formed by the first sub-housing 31 and the second sub-housing 32 is beneficial for the conductive member 5 to pass through and then separately form electrical connections to the controller 4, the first motor 1, and the second motor 2, which is beneficial for the controller 4 to control the operating condition of the first motor 1 and the second motor 2 through the conductive member 5. The conductive member 5 relatively seals the first accommodating cavity 3101 and the second accommodating cavity 3201, which reduces the contamination of the controller 4, the first motor 1, and the second motor 2, and reduces the number of components used for sealing, thereby simplifying the structure of the power device of the present disclosure.

In the embodiments of the present disclosure, the inlet of the first accommodating cavity 3101 and the inlet of the second accommodating cavity 3201 are respectively located on the upper side and the lower side of the third accommodating cavity 301 along the height direction of the housing 3. This is conducive to the conductive member 5 directly passing through the inlet of the first accommodating cavity 3101 and the inlet of the second accommodating cavity 3201 to form connections with the controller 4, the first motor 1, and the second motor 2, respectively. Among them, the conductive member 5 forms a seal with the inlet of the first accommodating cavity 3101 either via a threaded connection or by abutting against the first sub-housing 31 to form a seal for the first accommodating cavity 3101. Similarly, the conductive member 5 forms a seal with the inlet of the second accommodating cavity 3201 either via a threaded connection or by abutting against the second sub-housing 32 to form a seal for the second accommodating cavity 3201.

In the embodiments of the present disclosure, a part of the second sub-housing 32 is recessed in a direction distal to the first sub-housing 31, the recessed part and the first sub-housing 31 form the second accommodating cavity 3201, and meanwhile, the recessed part is located between the first motor 1 and the second motor 2, which is beneficial for the second sub-housing 32 to support the conductive member 5, preventing the conductive member 5 from protruding from the second sub-housing 32 and then interfering with the first sub-housing 31, and is also beneficial to improving the compactness of the power device of the present disclosure.

In the embodiments of the present disclosure, the third accommodating cavity 301 partially overlaps the gap 100, or the third accommodating cavity 301 is located within the gap 100.

In some embodiments of the present disclosure, as shown in FIG. 3, a first sealing surface 33 is formed between the first sub-housing 31 and the second sub-housing 32, and the first sealing surface 33 extends along the circumferential direction of the third accommodating cavity 301.

It should be understood that the first sealing surface 33 is beneficial to improving the sealing performance of the part of the conductive member 5 located in the third accommodating cavity 301, thereby reducing the occurrence of situations where the conductive member 5 is contaminated and thus unable to maintain normal operation.

In the embodiments of the present disclosure, the first sub-housing 31 and the second sub-housing 32 are connected by a bolt, the extension direction of the bolt is the height direction of the housing 3, and the height direction of the housing 3 refers to the arrangement direction of the first sub-housing 31 and the second sub-housing 32.

In the embodiments of the present disclosure, the first sealing surface 33 refers to an annular surface formed by contact between the first sub-housing 31 and the second sub-housing 32. The annular first sealing surface 33 is beneficial for the conductive member 5 to be mounted on the second sub-housing 32, and then the first sub-housing 31 is in contact with the second sub-housing 32, so that the conductive member 5 is located in the third accommodating cavity 301.

In the embodiments of the present disclosure, the first sealing surface 33 extending along the circumferential direction of the third accommodating cavity 301 means that the first sealing surface 33 is perpendicular to the height direction of the housing 3.

In some embodiments of the present disclosure, as shown in FIG. 3, the conductive member 5 includes a first wiring terminal 511, a connecting part 512, and a second wiring terminal 513. The connecting part 512 connects the first wiring terminal 511 and the second wiring terminal 513, the first wiring terminal 511 is connected to the controller 4, and the second wiring terminal 513 is separately connected to the first motor 1 and the second motor 2.

It should be understood that the first wiring terminal 511 is connected to the controller 4, and the second wiring terminal 513 is connected to the first motor 1 and the second motor 2. Since there are usually more than two first wiring terminals 511 and more than two second wiring terminals 513, the connecting part 512 may bear currents from multiple first wiring terminals 511 and multiple second wiring terminals 513, which is beneficial for the controller 4 to control the first motor 1 and the second motor 2 through the conductive member 5.

In the embodiments of the present disclosure, the first wiring terminal 511, the connecting part 512, and the second wiring terminal 513 are formed by an integrated molding process.

In the embodiments of the present disclosure, the conductive member 5 further includes a first bolt and a second bolt. The first bolt passes through the first wiring terminal 511 and presses the wiring terminal of the controller 4 onto the first wiring terminal 511. In this way, the first wiring terminal is connected to the controller 4. The second bolt passes through the second wiring terminal 513, so that the wiring terminal of the first motor 1 and the wiring terminal of the second motor 2 are pressed onto the second wiring terminal 513. In this way, the second wiring terminal is separately connected to the first motor 1 and the second motor 2.

In some embodiments of the present disclosure, as shown in FIG. 3, the power device includes a rear cover 6. The rear cover 6 is connected to the second sub-housing 32 to form a second sealing surface 34, the second sealing surface 34 extends along the circumferential direction of the opening of the second accommodating cavity 3201, the conductive member 5 and the rear cover 6 are arranged at intervals along the length direction of the housing 3, and the first wiring terminal 511 is closer to the second sealing surface 34 than the second wiring terminal 513 is.

It should be understood that the opening of the second accommodating cavity 3201 is configured for the first motor 1 and the second motor 2 to be placed in the second accommodating cavity 3201. The second sealing surface 34 formed by the rear cover 6 and the second sub-housing 32 improves the sealing performance of the second accommodating cavity 3201. The second sealing surface 34 extends along the circumferential direction of the opening of the second accommodating cavity 3201, which can reduce the entry of impurities into the interior of the second accommodating cavity 3201 through the opening of the second accommodating cavity 3201, thus preventing the contamination of the motor. The first wiring terminal 511 is closer to the second sealing surface 34 than the second wiring terminal 513 is, which can reduce the risk of interference caused by the second terminal 513 (located in the second accommodating cavity 3201) to the structure connecting the rear cover 6 and the second sub-housing 32. This thus helps to avoid the need for additional designs on the rear cover 6 and the second sub-housing 32 to bypass the second terminal 513.

In the embodiments of the present disclosure, the rear cover 6 and the second sub-housing 32 are connected through a connector 7, and the connector 7 extends in the length direction of the housing 3. The orthographic projection of the connector 7 on a projection plane partially overlaps the orthographic projection of the second wiring terminal 513 on the projection plane, and the projection plane is a plane perpendicular to the length direction of the housing 3. The connector 7 passes through the rear cover 6 and forms a threaded connection to the second sub-housing 32, thereby achieving the connection between the rear cover 6 and the second sub-housing 32.

In the embodiments of the present disclosure, the second sealing surface 34 is in the shape of a ring.

In the embodiments of the present disclosure, at least a part of the connecting part 512 is attached to the second sub-housing 32 and forms a third sealing surface with the second sub-housing 32. The third sealing surface surrounds the inlet of the second accommodating cavity 3201 and is located below the first sealing surface 33 in the height direction of the housing 3.

It should be understood that the first sealing surface 33 is formed by connecting the first sub-housing 31 and the second sub-housing 32, and therefore is affected by the structures of the first sub-housing 31 and the second sub-housing 32. The third sealing surface is formed by connecting the connecting part 512 and the second sub-housing 32, and therefore is affected by the structures of the connecting part 512 and the second sub-housing 32. The third sealing surface is located below the first sealing surface 33, so that the overall height of the housing 3 is only affected by the first sub-housing 31 and the second sub-housing 32, which is beneficial to shorten the height of the power device of the present disclosure.

In some embodiments of the present disclosure, as shown in FIG. 1, the first motor 1 is cylindrical, the second motor 2 is cylindrical, and the conductive member 5 is located between the side surface of the first motor 1 and the side surface of the second motor 2.

It should be understood that for the cylindrical first motor 1 and the cylindrical second motor 2, starting from the line connecting their centers (which extends along the width direction of the housing 3), the closer the part is to the conductive member 5, the greater the distance between the two motors. This facilitates arranging the conductive member 5 in the gap 100 while reducing interference with the first motor 1 and the second motor 2.

In some embodiments of the present disclosure, as shown in FIG. 2, along the width direction of the housing 3, the conductive member 5 is provided with a first end 521 and a second end 522; a first distance is formed between the first end 521 and the output end of the first motor 1 along the width direction of the housing 3, and a second distance is formed between the second end 522 and the output end of the second motor 2 along the width direction of the housing 3, the first distance being substantially equal to the second distance.

It should be understood that the first distance and the second distance may indicate the degree of interference of the conductive member 5 to the first motor 1 and the second motor 2. The smaller the first distance is, the more likely the conductive member 5 is to cause interference to the first motor 1; similarly, the smaller the second distance is, the more likely the conductive member 5 is to cause interference to the second motor 2. The first distance is substantially equal to the second distance, which is beneficial to balancing the interference of the conductive member 5 to the first motor 1 and the second motor 2, and also beneficial to disposing the conductive member 5 between the first motor 1 and the second motor 2.

In the embodiments of the present disclosure, due to the requirements of assembly and the limitations of the process, the first distance and the second distance do not need to be completely equal, and an error of 5% is allowed between the first distance and the second distance.

In the embodiments of the present disclosure, the first distance is 20 mm, 25 mm, 30 mm, 35 mm, 40 mm, 45 mm, 50 mm, 55 mm, 60 mm, 65 mm, 70 mm, 75 mm, 80 mm, or 85 mm, or is another value from 20 mm to 85 mm.

In the embodiments of the present disclosure, the second distance is 20 mm, 25 mm, 30 mm, 35 mm, 40 mm, 45 mm, 50 mm, 55 mm, 60 mm, 65 mm, 70 mm, 75 mm, 80 mm, or 85 mm, or is another value from 20 mm to 85 mm.

In the embodiments of the present disclosure, the output end of the first motor 1 refers to the center of the rotor shaft of the first motor 1.

In the embodiments of the present disclosure, the output end of the second motor 2 refers to the center of the rotor shaft of the second motor 2.

In some embodiments of the present disclosure, as shown in FIG. 1, the width of the part of the conductive member 5 located in the gap 100 is greater than the first distance.

It should be understood that the conductive member 5 with a large width is beneficial to forming connections to the first motor 1 and the second motor 2 separately, and meanwhile, can improve the compactness of the power device of the present disclosure.

In the embodiments of the present disclosure, the width of the conductive member 5 is 80 mm, 85 mm, 90 mm, 95 mm, 100 mm, 105 mm, 110 mm, 115 mm, 120 mm, 125 mm, 130 mm, 135 mm, 140 mm, 145 mm, 150 mm, 155 mm, 160 mm, 165 mm, 170 mm, 175 mm or 180 mm, or is another value from 80 mm and 180 mm.

In some embodiments of the present disclosure, the conductive member 5 includes multiple third wiring terminals 514; the multiple third wiring terminals 514 are located between the first motor 1 and the second motor 2 and arranged along the width direction of the conductive member 5, an electrical clearance 51401 is formed between two adjacent third wiring terminals 514, and each third wiring terminal 514 is connected to one of the first motor 1 and the second motor 2.

It should be understood that the third wiring terminals 514 are connected to the first motor 1 and the second motor 2, which is beneficial for the controller 4 to control the first motor 1 and the second motor 2 through the conductive member 5.

In the embodiments of the present disclosure, the width of the conductive member 5 refers to the sum of the widths of all the third wiring terminals 514 and all the electrical clearances 51401.

According to a second aspect of the present disclosure, a vehicle is provided. The vehicle includes the power device as defined in the above embodiments.

It should be understood that, by adopting the power device of the above embodiments, the vehicle of the present disclosure has the same technical effects as the above embodiments, which will not be elaborated here.

In the embodiments of the present disclosure, the vehicle is a battery electric vehicle or a hybrid electric vehicle.

It should be understood by those of ordinary skill in the art that all or part of the steps for implementing the above embodiments are completed by hardware, or are completed by instructing relevant hardware by a program stored in a computer-readable storage medium. The storage medium mentioned above is a read-only memory, a magnetic disk, a compact disk, or the like.

Described above are merely preferred embodiments of the present disclosure and are not intended to limit the present disclosure. Any modifications, equivalents, improvements, and the like made within the spirit and principle of the present disclosure should fall within the protection scope of the present disclosure.

## Claims

1. A power device, comprising a first motor (1), a second motor (2), a housing (3), a controller (4), and a conductive member (5), wherein
the first motor (1) and the second motor (2) are both located inside the housing (3) and arranged at intervals along a width direction of the housing (3);
the controller (4) is located inside the housing (3), and the controller (4) is located above the first motor (1) and the second motor (2) along a height direction of the housing (3);
a gap (100) is formed between the controller (4), the first motor (1), and the second motor (2);
the conductive member (5) is located in the gap (100), and electrically connects the controller (4) to the first motor (1) as well as the controller (4) to the second motor (2).

2. The power device according to claim 1, wherein the housing (3) comprises a first sub-housing (31) and a second sub-housing (32), wherein the first sub-housing (31) is provided with a first accommodating cavity (3101), the second sub-housing (32) is provided with a second accommodating cavity (3201), a third accommodating cavity (301) is formed between the first sub-housing (31) and the second sub-housing (32), and the conductive member (5) extends from the first accommodating cavity (3101) into the second accommodating cavity (3201) through the third accommodating cavity (301) and relatively seals the first accommodating cavity (3101) and the second accommodating cavity (3201).

3. The power device according to claim 2, wherein the first sub-housing (31) and the second sub-housing (32) are connected and form a first sealing surface (33), and the first sealing surface (33) extends along a circumferential direction of the third accommodating cavity (301).

4. The power device according to claim 3, wherein the conductive member (5) comprises a first wiring terminal (511), a connecting part (512), and a second wiring terminal (513), wherein the connecting part (512) connects the first wiring terminal (511) and the second wiring terminal (513), the first wiring terminal (511) is connected to the controller (4), and the second wiring terminal (513) is connected to the first motor (1) and the second motor (2) respectively.

5. The power device according to claim 4, comprising a rear cover (6), wherein the rear cover (6) is connected to the second sub-housing (32) to form a second sealing surface (34), the second sealing surface (34) extends along a circumferential direction of an opening of the second accommodating cavity (3201), the conductive member (5) and the rear cover (6) are arranged at intervals along a length direction of the housing (3), and the first wiring terminal (511) is closer to the second sealing surface (34) than the second wiring terminal (513) is.

6. The power device according to claim 1, wherein the first motor (1) is cylindrical, the second motor (2) is cylindrical, and the conductive member (5) is located between a side surface of the first motor (1) and a side surface of the second motor (2).

7. The power device according to claim 6, wherein along the width direction of the housing (3), the conductive member (5) is provided with a first end (521) and a second end (522), a first distance is formed between the first end (521) and an output end of the first motor (1) along the width direction of the housing (3), and a second distance is formed between the second end (522) and an output end of the second motor (2) along the width direction of the housing (3), the first distance being substantially equal to the second distance.

8. The power device according to claim 7, wherein a width of a part of the conductive member (5) located in the gap (100) is greater than the first distance.

9. The power device according to claim 8, wherein the conductive member (5) comprises a plurality of third wiring terminals (514), wherein the plurality of third wiring terminals (514) are located between the first motor (1) and the second motor (2) and arranged along a width direction of the conductive member (5), an electrical clearance (51401) is formed between two adjacent third wiring terminals (514), and each of the third wiring terminals (514) is connected to one of the first motor (1) and the second motor (2).

10. A vehicle, comprising the power device as defined in any one of claims 1 to 9.
